# EUROPEAN PATENT SPECIFICATION

(11) **EP 3 623 405 B1**
(45) Date of publication and mention of the grant of the patent: **02.08.2023**
(21) Application number: 18194248.3
(22) Date of filing: 13.09.2018
(51) Int. Cl.: C08G 59/42

(54) **CATALYST-FREE CURABLE EPOXY COMPOSITIONS**
KATALYSATORFREIE HÄRTBARE EPOXYZUSAMMENSETZUNGEN
COMPOSITIONS ÉPOXY DURCISSABLES SANS CATALYSEUR

(43) Date of publication of application: 18.03.2020
(73) Proprietor: SHPP Global Technologies B.V., 4612 PX Bergen op Zoom (NL)
(72) Inventor: AGRAWAL, MUKESH, 562125 Karnataka (IN); VERGHESE, NIKHIL K.E., 6160 AH Geleen (NL)
(74) Representative: Balder IP Law, S.L.

(56) References cited:
- WO-A1-2018/057055
- US-A- 3 634 326
- US-A- 4 002 599
- US-A1- 2016 237 200

## Description

### BACKGROUND

Thermoset polymers are used in a wide variety of consumer and industrial products including protective coatings, adhesives, electronic laminates (such as those used in the fabrication of printed circuit boards), flooring and paving, glass fiber-reinforced pipes, and automotive parts (such as leaf springs, pumps, and electrical components). Thermoset epoxies are commonly derived from thermosetting epoxy resins that are polymerized in the presence of a co-reactive curing agent (also referred to in the art as a hardener) and a catalytic curing agent (also referred to in the art as a cure accelerator or a catalyst) to afford a cured thermoset polymer.

Anhydride curing agents can be used to provide cured epoxies having higher heat properties, better electrical properties, longer pot life, and lower shrinkage. Aromatic dianhydrides are a class of anhydride curing agents that can provide high density crosslinking to the cured thermoset epoxy, which can further enhance the high heat properties. However, curing epoxy formulations that include dianhydrides often requires the use of a curing catalyst in conjunction with high temperatures (e.g., 200°C) for extended periods of time (e.g., 24 hours). The use of curing catalysts can deteriorate the properties of the resulting cured epoxy product, and increase both the complexity and cost of the curing process.

U.S. Patent No. 4,002,599 A describes epoxy resin compositions that are curable at ambient temperatures to have useful properties at high temperature, and teaches biphenyl anhydride epoxy curing agents are solubilized at room temperature in polyglycidyl derivatives of aminophenols to afford epoxy resin compositions curable at room temperature to provide cured epoxy systems characterized by high temperature resistance, solvent resistance, and chemical resistance. U.S. Patent No. 3,634,326 A describes curable resinous compositions with a base of poly-epoxy resin and slightly soluble anhydrides of carboxylic acids, and teaches a means for carrying out a controlled reaction between the dianhydride and the epoxy resin, in such manner as to be able to limit at will the degree of development of the reaction and thus obtain homogeneous compositions still having a certain reactivity, and which are totally soluble in the usual solvents of the epoxy resins. WO Pub No. 2018/057055 A1 describes a high heat epoxy composite including a substrate, a matrix comprising a high heat epoxy compound, and an aromatic diamine hardener, where the matrix composition comprises 20 to 40 total weight percent of the composite. A cured sample of the matrix composition has a glass transition temperature of greater than or equal to 200°C; and a cured, laminated sample of the composite has a flexural strength of greater than 850 MPa measured as per ASTM D7264; and a flexural modulus of greater than 65 GPa measured as per ASTM D7264. U.S. Patent Pub. No. 2016/0237200 A1 describes a curable epoxy resin composition, an article, and a method for fabricating the same. The curable resin composition includes an epoxy resin; an anhydride; and a catalyst. The curable epoxy resin composition is purported to be non-brittle, and to have good fatigue resistance and high thermal decomposition temperature.

Accordingly, there remains a need for curable epoxy compositions suitable for manufacturing thermoset (cured) epoxy resins for high heat applications. More particularly, there remains a need for curable epoxy compositions that can be cured in the absence of a curing catalyst.

### BRIEF DESCRIPTION

According to an aspect, a curable epoxy composition comprises 100 parts by weight of an epoxy resin composition comprisinga bisphenol A epoxy resin, a triglycidyl-substituted epoxy resin, a tetraglycidyl-substituted epoxy resin, a bisphenol F epoxy resin, a phenol novolak epoxy resin, a cresol novolak epoxy resin, a cycloaliphatic diglycidyl ester epoxy resin, a cycloaliphatic epoxy resin comprising a ring epoxy group, an epoxy resin containing a spiro-ring, a hydantoin epoxy resin, or any combination thereof; 30 to 200 parts by weight of an aromatic dianhydride curing agent of formula (1) 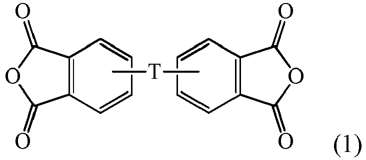 wherein T is -O-, -S-, -SO₂-, -SO- or -O-Z-O- wherein Z is an aromatic C₆₋₂₄ monocyclic or polycyclic moiety optionally substituted with 1 to 6 C₁₋₈ alkyl groups, 1 to 8 halogen atoms, or a combination comprising at least one of the foregoing, wherein the composition does not contain a catalyst, and wherein the composition contains no solvent or reactive diluent solvent.

According to another aspect, a method for the manufacture of the curable epoxy composition comprises contacting the epoxy resin composition and the aromatic dianhydride curing agent at a temperature of 130 to 200°C, preferably 140 to 190°C, more preferably 150 to 180°C, to provide reaction mixture.

In an aspect, a thermoset epoxy composition comprising a cured product of the curable epoxy composition is provided.

According to still another aspect, a method for the manufacture of a thermoset epoxy composition comprises curing the curable epoxy composition, wherein the curing is performed without a catalyst; preferably wherein the curing of the curable epoxy composition comprises compression molding, injection molding, transfer molding, pultrusion, resin casting, or a combination comprising at least one of the foregoing.

In an aspect, an article comprising the thermoset epoxy composition, wherein the article is preferably in the form of a composite, a foam, a fiber, a layer, a coating, an encapsulant, an adhesive, a sealant, a component, a prepreg, a casing, or a combination comprising at least one of the foregoing, is provided.

The above described and other features are exemplified by the following detailed description.

### DETAILED DESCRIPTION

This disclosure relates to a catalyst-free curable epoxy composition including an epoxy resin and an aromatic dianhydride as curing agent. The inventors have discovered that an aromatic dianhydride, for example bisphenol-A dianhydride (BPA-DA), can be a useful curing agent for making high heat cured epoxies in the absence of a catalyst. The curable epoxy composition including the aromatic dianhydride as an epoxy curing agent can provide a cured thermoset product having good high heat resistance properties, such as a glass transition temperature that can be greater than 210°C. Moreover, the curing time and heat of polymerization when using the curable epoxy composition may be less than those of other curable epoxy compositions that do not include the aromatic dianhydride curing agent. The disclosed curable epoxy composition and the corresponding cured thermoset product can be used in a variety of high heat applications including but not limited to adhesives, coatings, epoxy tooling compositions, potting compositions, and fiber-reinforced composites.

The curable epoxy composition includes 100 parts by weight of an epoxy resin composition comprising a bisphenol A epoxy resin, a triglycidyl-substituted epoxy resin, a tetraglycidyl-substituted epoxy resin, a bisphenol F epoxy resin, a phenol novolak epoxy resin, a cresol novolak epoxy resin, a cycloaliphatic diglycidyl ester epoxy resin, a cycloaliphatic epoxy resin comprising a ring epoxy group, an epoxy resin containing a spiro-ring, a hydantoin epoxy resin, or any combination thereof; and 30 to 200 parts by weight of an aromatic dianhydride curing agent. The curable epoxy composition does not contain a catalyst or accelerator and the composition contains no solvent or reactive diluent solvent.

In particular embodiments, the stoichiometric ratio between the aromatic dianhydride curing agent and the epoxy resin composition is 0.1:1 to 2.0:1, preferably 0.4:1 to 1.2:1, more preferably 0.6:1 to 1:1. The stoichiometric ratio is the molar ratio of anhydride functionalities in the dianhydride curing agent to the epoxy functionalities in the epoxy resin composition. The stoichiometric ratio is also referred to herein as the anhydride to epoxy (A/E) ratio.

In some embodiments, the curable epoxy composition includes 50 to 150, preferably 60 to 140, more preferably 80 to 120 parts by weight of the aromatic dianhydride curing agent, based on the total parts by weight of the epoxy resin composition and the aromatic dianhydride curing agent.

As described therein, the epoxy resin composition can be a bisphenol A epoxy resin, a triglycidyl-substituted epoxy resin, a tetraglycidyl-substituted epoxy resin, a bisphenol F epoxy resin, a phenol novolak epoxy resin, a cresol novolak epoxy resin, a cycloaliphatic diglycidyl ester epoxy resin, a cycloaliphatic epoxy resin comprising a ring epoxy group, an epoxy resin containing a spiro-ring, a hydantoin epoxy resin, or a combination thereof. In an embodiment, the epoxy resin is bisphenol-A diglycidyl ether (BPA-DGE).

The aromatic dianhydride can be of the formula (1) 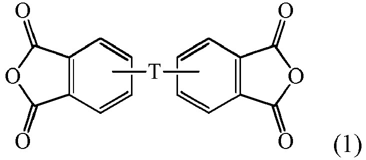 wherein T is -O-, -S-, -SO₂-, -SO-, or -O-Z-O- wherein Z is an aromatic C₆₋₂₄ monocyclic or polycyclic moiety optionally substituted with 1 to 6 C₁₋₈ alkyl groups, 1 to 8 halogen atoms, or a combination comprising at least one of the foregoing. In some embodiments, the R¹ is a monovalent C₁₋₁₃ organic group. In some embodiments, T is -O- or a group of the formula -O-Z-O- wherein the divalent bonds of the -O- or the -O-Z-O- group are in the 3,3', 3,4', 4,3', or the 4,4' positions.

Exemplary groups Z include groups of formula (2) 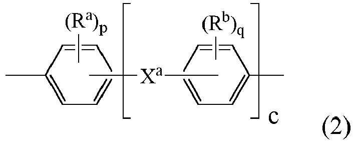 wherein R^{a} and R^{b} are each independently the same or different, and are a halogen atom or a monovalent C₁₋₆ alkyl group, for example; p and q are each independently integers of 0 to 4; c is 0 to 4; and X^{a} is a bridging group connecting the hydroxy-substituted aromatic groups, where the bridging group and the hydroxy substituent of each C₆ arylene group are disposed ortho, meta, or para (specifically para) to each other on the C₆ arylene group. The bridging group X^{a} can be a single bond, -O-, -S-, -S(O)-, -S(O)₂-, -C(O)-, or a C₁₋₁₈ organic bridging group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. A specific example of a group Z is a divalent group of formula (3a) or (3b) 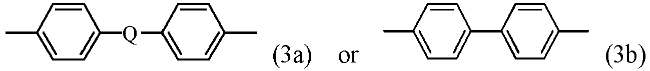 wherein Q is -O-, -S-, -C(O)-, -SOz-, -SO-, -P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (including a perfluoroalkylene group). In some embodiments, Q is 2,2-isopropylidene.

In some embodiments, T is -O-Z-O-, preferably wherein Z is derived from bisphenol A (i.e., Z is 2,2-(4-phenylene)isopropylidene). Illustrative examples of aromatic dianhydrides include 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; and, 4-(2,3-dicarboxyphenoxy)-4'-(3,4-dicarboxyphenoxy)diphenyl sulfone dianhydride.

In some embodiments, the curable epoxy composition includes an additive composition. The additive composition can include a particulate filler, a fibrous filler, a reinforcing material, an antioxidant, a heat stabilizer, a light stabilizer, a ultraviolet light stabilizer, a ultraviolet light-absorbing compound, a near infrared light-absorbing compound, an infrared light-absorbing compound, a plasticizer, a lubricant, a release agent, a antistatic agent, an anti-fog agent, an antimicrobial agent, a colorant, a surface effect additive, a radiation stabilizer, a flame retardant, flame retardant synergists such as antimony pentoxide, an anti-drip agent, a fragrance, an adhesion promoter, a flow enhancer, a coating additive, a polymer different from the thermoset polymer, or a combination comprising at least one of the foregoing. In a preferred embodiment, the additive composition comprises a flame retardant, a particulate filler, a fibrous filler, an adhesion promoter, a flow enhancer, a coating additive, a colorant, or a combination comprising at least one of the foregoing.

In particular embodiments, the additive composition includes a particulate filler. The particulate filler can include alumina powder, hydrated alumina powder, quartz powder or fused quartz powder, glass fibers, carbon fibers, or a combination comprising at least one of the foregoing. In one embodiment, the curable composition further comprises a fibrous substrate (woven or non-woven) such as glass, quartz, polyester, polyimide, polypropylene, cellulose, carbon fibers and carbon fibrils, nylon or acrylic fibers, preferably a glass substrate, that can be impregnated with the curable composition (i.e., prepregs).

In some embodiments, the curable composition further comprises a poly(phenylene ether) copolymer. The poly(phenylene ether) copolymer is ideally suited as a reactive component in the curable composition because it is bifunctional, with two reactive phenolic groups. In some embodiments, the curable epoxy composition can further comprise 1 to 100 parts by weight of the poly(phenylene ether) copolymer.

The curable epoxy composition does not include a catalyst. As used herein, "catalyst" means a catalyst compound that initiates polymerization of epoxide groups or accelerates the reaction of curing agents with epoxide groups, and can encompass various terms such as curing accelerators, hardening accelerators, curing catalysts, and curing promoters. Catalyst compounds include, but are not limited to, benzotriazoles; triazines; piperazines such as aminoethylpiperazine, N-(3-aminopropyl)piperazine, or the like; imidazoles such as 1-methylimidazole, 2-methylimidazole, 3-methyl imidazole, 4-methylimidazole, 5-methylimidazole, 1-ethylimidazole, 2-ethylimidazole, 3-ethylimidazole, 4-ethylimidazole, 5-ethylimidazole, 1-n-propylimidazole, 2-n-propylimidazole, 1-isopropylimidazole, 2-isopropylimidazole, 1-n-butylimidazole, 2-n-butylimidazole, 1-isobutylimidazole, 2-isobutylimidazole, 2-undecyl-1H-imidazole, 2-heptadecyl-1H-imidazole, 1,2-dimethylimidazole, 1,3-dimethylimidazole, 2,4-dimethylimidazole, 2-ethyl-4-methylimidazole, 1-phenylimidazole, 2-phenyl-1H-imidazole, 4-methyl-2-phenyl-1H-imidazole, 2-phenyl-4-methylimidazole, 1-benzyl-2-methylimidazole, 1-benzyl-2-phenylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 2-phenyl-4,5-dihydroxymethylimidazole, 2-phenyl-4-methyl-5-hydroxymethylimidazole, 1-cyanoethyl-2-phenyl-4,5-di(2-cyanoethoxy)methylimidazole; cyclic amidine such as 4-diazabicyclo(2,2,2)octane (DABCO), diazabicycloundecene (DBU), 2-phenyl imidazoline, or the like; N,N-dimethylaminopyridine (DMAP); sulfamidates; C₄₋₁₀ alkylamines such as di-n-butylamine, tri-n-butylamine, and 2-ethylhexylamine; tetra(C₁₋₈ alkyl)guanidines such as tetramethylguanidine; tertiary amines and salts thereof; ureas; metal salts of diketones such as aluminum tris(acetylacetonate) and zinc bis(acetylacetonate); diaryliodonium salts such as the tetrafluoroborate, hexafluorophosphate, hexafluoroarsenate and hexafluoroantimonate; ultraviolet-activated triarylsulfonium salts containing the same anions; arylene polyamides; phosphines, diphosphines, phosphine oxides, and phosphonium salts; sulfonic acids, sulfonamides, sulfones, and triarylsulfonium salts; metal salts of fatty acids; and phenolic compounds such as bisphenol A, pyrogallol, dihydroxydiphenyls, hydroxybenzaldehydes such as salicylaldehyde, catechol, resorcinol, hydroquinone, phenol-formaldehyde or resorcinol-formaldehyde condensates and halogenated phenols.

The curable epoxy composition can be manufactured by combining the epoxy resin composition and the aromatic dianhydride curing agent at a temperature of 130 to 200°C, preferably 140 to 190°C, more preferably 150 to 180°C to provide a reaction mixture, wherein the reaction mixture contains no solvent or reactive diluent solvent, and wherein the curable epoxy composition is then formed from the reaction mixture. The curable epoxy composition is then formed from the reaction mixture.

In another aspect, disclosed is a thermoset epoxy composition that includes a cured product of the curable epoxy composition. The cured product of the curable epoxy composition can be obtained as provided herein.

The thermoset epoxy composition including the cured composition can exhibit a single glass transition temperature (T_{g}), such as a single T_{g} greater than or equal to 170°C, preferably greater than or equal to 180°C, more preferably greater than or equal to 200°C. The glass transition temperature can be determined using dynamic mechanical analysis (DMA). Alternatively, T_{g} can be determined using differential scanning calorimetry (DSC) with a heating rate of 10°C/minute or 20°C/minute.

The resulting thermoset epoxy composition after curing can be clear and/or transparent. The thermoset epoxy composition including the cured composition can exhibit a light transmission of greater than 50%, preferably greater than 70%, more preferably greater than 90%. The light transmission can be determined on a 2 millimeter (mm) plaque according to ASTM D 1003. As used herein, "light transmission" means transmission of visible light in a wavelength region of 380 to 750 nanometers (nm).

In a preferred embodiment, the thermoset epoxy composition has a glass transition temperature of greater than or equal to 170°C, preferably greater than or equal to 180°C, more preferably greater than or equal to 200°C, as determined by dynamic mechanical analysis; and a light transmission of greater than 50%, preferably greater than 70%, more preferably greater than 90%, as determined according to ASTM D1003 on a 2 mm plaque.

The thermoset epoxy composition can be manufactured by curing the curable epoxy composition. There is no particular limitation on the method by which the composition may be cured. The composition may be cured, for example, by thermal curing or radiation curing. Combinations of thermal curing and radiation curing can also be used. When thermal curing is used, the heating temperature can be from 80 to 300°C, preferably 120 to 240°C. The heating period can be from 1 minute to 10 hours, preferably 1 minute to 6 hours, more preferably 3 hours to 5 hours. The curing process can be staged to produce a partially cured and often tack-free resin, which then is fully cured by heating for longer periods or temperatures within the aforementioned ranges. Radiation curing can be performed using ultraviolet light or electron beams.

In particular embodiments, the curable epoxy composition can be cured by compression molding, injection molding, transfer molding, pultrusion, resin casting, or a combination comprising at least one of the foregoing. In some embodiments, the curable epoxy composition can be disposed in, for example injected into, a mold and then cured at 150 to 260°C in the mold. The curing time can be from 1 to 15 hours in the mold. Various molded articles or components can be prepared in this manner, including those described herein.

In a particular embodiment, wherein the epoxy composition comprises bisphenol A diglycidyl ether and a dianhydride curing agent comprising bisphenol A dianhydride; wherein the curable epoxy composition is manufactured by contacting the epoxy resin composition and the aromatic dianhydride curing agent at a temperature of 130 to 200°C, preferably 140 to 190°C, more preferably 150 to 180°C, to provide a reaction mixture; and wherein the reaction mixture contains no solvent or reactive diluent solvent; preferably wherein the anhydride to epoxy (A/E) ratio is 0.8:1, the curable epoxy composition is disposed into the mold, wherein the mold is preheated to 130°C, and the curing of the epoxy resin composition is at 220°C, and the cured epoxy resin produced by the curing has a glass transition temperature of 213 to 243°C, as determined by dynamic mechanical analysis.

The thermoset epoxy composition can exhibit good ductility, good fracture toughness, unnotched Izod impact strength, and good tensile elongation.

The thermoset epoxy composition can exhibit increased char formation on pyrolysis.

The thermoset epoxy composition can exhibit low moisture absorption.

The thermoset epoxy composition can exhibit decreased shrinkage upon curing.

The thermoset epoxy composition can exhibit decreased dielectric properties.

The disclosed curable epoxy compositions and thermoset epoxy compositions can be used in a variety of applications and articles, including any applications where conventional epoxides are currently used. Exemplary uses and applications include coatings such as protective coatings, sealants, weather resistant coatings, scratch resistant coatings, and electrical insulative coatings; adhesives; binders; glues; composite materials such as those using carbon fiber and fiberglass reinforcements. When utilized as a coating, the disclosed compounds and compositions can be deposited on a surface of a variety of underlying substrates. For example, the compositions can be deposited on a surface of metals, plastics, glass, fiber sizings, ceramics, stone, wood, or any combination thereof. The disclosed compositions can be used as a coating on a surface of a metal container, such as those commonly used for packaging and containment in the paint and surface covering industries. In some instances the coated metal is aluminum or steel.

Articles in the form of in the form of a composite, a foam, a fiber, a layer, a coating, an encapsulant, an adhesive, a sealant, a component, a prepreg, a casing, or a combination comprising at least one of the foregoing that can be prepared using the disclosed curable epoxy compositions and thermoset epoxy compositions include, for example, electrical components, and computer components. Other articles include, for example, components of transport, including bicycle, motorcycle, automotive, aircraft, and watercraft exterior and interior components. In certain embodiments, the disclosed curable epoxy compositions are used for the production of composite materials for use in the aerospace industry. The curable epoxy compositions can be used in forming composites used for printed circuit boards. Methods of forming composites for use in printed circuit boards are known in the art and are described in, for example, U.S. Pat. No. 5,622,588 to Weber, U.S. Pat. No. 5,582,872 to Prinz, and U.S. Pat. No. 7,655,278 to Braidwood.

Additional applications include, for example, acid bath containers; neutralization tanks; aircraft components; bridge beams; bridge deckings; electrolytic cells; exhaust stacks; scrubbers; sporting equipment; stair cases; walkways; automobile exterior panels such as hoods and trunk lids; floor pans; air scoops; pipes and ducts, including heater ducts; industrial fans, fan housings, and blowers; industrial mixers; boat hulls and decks; marine terminal fenders; tiles and coatings; building panels; business machine housings; trays, including cable trays; concrete modifiers; dishwasher and refrigerator parts; electrical encapsulants; electrical panels; tanks, including electrorefining tanks, water softener tanks, fuel tanks, and various filament-wound tanks and tank linings; furniture; garage doors; gratings; protective body gear; luggage; outdoor motor vehicles; pressure tanks; printed circuit boards; optical waveguides; radomes; railings; railroad parts such as tank cars; hopper car covers; car doors; truck bed liners; satellite dishes; signs; solar energy panels; telephone switchgear housings; tractor parts; transformer covers; truck parts such as fenders, hoods, bodies, cabs, and beds; insulation for rotating machines including ground insulation, turn insulation, and phase separation insulation; commutators; core insulation and cords and lacing tape; drive shaft couplings; propeller blades; missile components; rocket motor cases; wing sections; sucker rods; fuselage sections; wing skins and fairings; engine narcelles; cargo doors; tennis racquets; golf club shafts; fishing rods; skis and ski poles; bicycle parts; transverse leaf springs; pumps, such as automotive smog pumps; electrical components, embedding, and tooling, such as electrical cable joints; wire windings and densely packed multi-element assemblies; sealing of electromechanical devices; battery cases; resistors; fuses and thermal cut-off devices; coatings for printed wiring boards; casting items such as capacitors, transformers, crankcase heaters; small molded electronic parts including coils, capacitors, resistors, and semiconductors; as a replacement for steel in chemical processing, pulp and paper, power generation, and wastewater treatment; scrubbing towers; pultruded parts for structural applications, including structural members, gratings, and safety rails; swimming pools, swimming pool slides, hot-tubs, and saunas; drive shafts for under the hood applications; dry toner resins for copying machines; marine tooling and composites; heat shields; submarine hulls; prototype generation; development of experimental models; laminated trim; drilling fixtures; bonding jigs; inspection fixtures; industrial metal forming dies; aircraft stretch block and hammer forms; vacuum molding tools; flooring, including flooring for production and assembly areas, clean rooms, machine shops, control rooms, laboratories, parking garages, freezers, coolers, and outdoor loading docks; electrically conductive compositions for antistatic applications; for decorative flooring; expansion joints for bridges; injectable mortars for patch and repair of cracks in structural concrete; grouting for tile; machinery rails; metal dowels; bolts and posts; repair of oil and fuel storage tanks, and numerous other applications.

Methods of forming a composite can include impregnating a reinforcing structure with a curable epoxy composition; partially curing the curable epoxy composition to form a prepreg; and laminating one or a plurality of prepregs. The lamination can include disposing an additional layer, e.g., an electrically conductive layer or an adhesive or bond ply on a side of a prepreg before lamination. The lamination can include disposing an additional layer, e.g., an electrically conductive layer or an adhesive or bond ply on a side of a prepreg before lamination.

Reinforcing structures suitable for prepreg formation are known in the art. Suitable reinforcing structures include reinforcing fabrics. Reinforcing fabrics include those having complex architectures, including two or three-dimensional braided, knitted, woven, and filament wound. The curable epoxy composition is capable of permeating such complex reinforcing structures. The reinforcing structure can comprise fibers of materials known for the reinforcement of plastics material, for example fibers of carbon, glass, metal, and aromatic polyamides. Suitable reinforcing structures are described, for example, in Anonymous (Hexcel Corporation), "Prepreg Technology", March 2005, Publication No. FGU 017b; Anonymous (Hexcel Corporation), "Advanced Fibre Reinforced Matrix Products for Direct Processes", June 2005, Publication No. ITA 272; and Bob Griffiths, "Farnborough Airshow Report 2006", CompositesWorld.com, September 2006. The weight and thickness of the reinforcing structure are chosen according to the intended use of the composite using criteria well known to those skilled in the production of fiber reinforced resin composites. The reinforced structure can contain various finishes suitable for the epoxy matrix.

The method of forming the composite can comprise partially curing the curable epoxy composition after the reinforcing structure has been impregnated with it. Partial curing is curing sufficient to reduce or eliminate the wetness and tackiness of the curable composition but not so great as to fully cure the composition. The resin in a prepreg is customarily in the partially cured state, and those skilled in the thermoset arts, and particularly the reinforced composite arts, understand the concept of partial curing and how to determine conditions to partially cure a resin without undue experimentation. References herein to properties of the "cured epoxy composition" refer to a composition that is substantially fully cured. For example, the resin in a laminate formed from prepregs is typically substantially fully cured. One skilled in the thermoset arts can determine whether a sample is partially cured or substantially fully cured without undue experimentation. For example, one can analyze a sample by differential scanning calorimetry (DSC) to look for an exotherm indicative of additional curing occurring during the analysis. A sample that is partially cured will exhibit an exotherm. A sample that is substantially fully cured will exhibit little or no exotherm. Partial curing can be effected by subjecting the curable-composition-impregnated reinforcing structure to a temperature of 133 to 140°C for 4 to 10 minutes.

Commercial-scale methods of forming composites are known in the art, and the curable epoxy compositions described herein are readily adaptable to existing processes and equipment. For example, prepregs are often produced on treaters. The main components of a treater include feeder rollers, a resin impregnation tank, a treater oven, and receiver rollers. The reinforcing structure (E-glass, for example) is usually rolled into a large spool. The spool is then put on the feeder rollers that turn and slowly roll out the reinforcing structure. The reinforcing structure then moves through the resin impregnation tank, which contains the curable composition. The varnish impregnates the reinforcing structure. After emerging from the tank, the coated reinforcing structure moves upward through the vertical treater oven, which is typically at a temperature of 175 to 200°C, and the solvent of the varnish is boiled away. The resin begins to polymerize at this time. When the composite comes out of the tower it is sufficiently cured so that the web is not wet or tacky. The cure process, however, is stopped short of completion so that additional curing can occur when laminate is made. The web then rolls the prepreg onto a receiver roll.

While the above-described curing methods rely on thermal curing, it is also possible to effect curing with radiation, including ultraviolet light and electron beams. Combinations of thermal curing and radiation curing can also be used.

Processes useful for preparing the articles and materials include those generally known to the art for the processing of thermosetting resins. Such processes have been described in the literature as in, for example, Engineered Materials Handbook, Volume 1, Composites, ASM International Metals Park, Ohio, copyright 1987 Cyril A. Dostal Senior Ed, pp. 105-168 and 497-533, and "Polyesters and Their Applications" by Bjorksten Research Laboratories, Johan Bjorksten (pres.) Henry Tovey (Ch. Lit. Ass.), Betty Harker (Ad. Ass.), James Henning (Ad. Ass.), Reinhold Publishing Corporation, New York, 1956. Processing techniques include resin transfer molding; sheet molding; bulk molding; pultrusion; injection molding, including reaction injection molding (RIM); atmospheric pressure molding (APM); casting, including centrifugal and static casting open mold casting; lamination including wet or dry lay-up and spray lay up; also included are contact molding, including cylindrical contact molding; compression molding; including vacuum assisted resin transfer molding and chemically assisted resin transfer molding; matched tool molding; autoclave curing; thermal curing in air; vacuum bagging; pultrusion; Seeman's Composite Resin Infusion Manufacturing Processing (SCRIMP); open molding, continuous combination of resin and glass; and filament winding, including cylindrical filament winding. In certain embodiments, an article can be prepared from the disclosed curable compositions via a resin transfer molding process.

This disclosure is further illustrated by the following examples, which are nonlimiting.

### EXAMPLES

Materials used in the examples are described in Table 1.

**Table 1.**

| Component | Description | Source |
|---|---|---|
| BPA-DGE | Diglycidyl ether of bisphenol A, CAS Reg. No. 1675-54-3. | Sigma-Aldrich |
| BPA-DA | Bisphenol A dianhydride, CAS Reg. No. 38103-06-9. | SABIC |
| MTHPA | Tetrahydro-4-methylphthalic anhydride, CAS Reg. No. 34090-76-1. | TCI Chemicals |
| MHHPA | Hexahydro-4-methylphthalic anhydride, CAS Reg. No. 19438-60-9. | Sigma-Aldrich |
| NMA | Methyl-5-norbomene-2,3-dicarboxylic anhydride, CAS Reg. No. 25134-21-8. | Sigma-Aldrich |
| PMDA | Pyromellitic dianhydride, CAS Reg. No. 89-32-7. | Sigma-Aldrich |

### Sample Preparation

### Example 1.

BPA-DGE is heated at 160°C and combined with BPA-DA at an anhydride to epoxy (A/E) ratio of 0.8:1 by weight. A homogenous and transparent reaction mixture is afforded. The reaction mixture was poured into a preheated mold (130°C) and then cured in the mold at 220°C for 1 hour to provide a rigid and clear casting.

### Example 2.

The same procedure as Example 1 was followed, except the curing time was 3 hours.

### Example 3.

The same procedure as Example 1 was followed, except the curing time was 5 hours.

### Example 4.

The same procedure as Example 1 was followed, except the curing time was 7 hours.

### Example 5.

The same procedure as Example 1 was followed, except the curing time was 15 hours.

### Comparative Example 1.

BPA-DGE was combined with MHHPA at 23°C with an A/E ratio of 0.8:1 by weight. The reaction mixture was heated at 90°C and then poured into a preheated mold (130°C) and cured in the mold at 220°C for 1 hour. No rigid epoxy resin was afforded.

### Comparative Example 2.

The same procedure as Comparative Example 1 was used, except the curing time as 15 hours. No rigid epoxy resin was afforded.

### Comparative Example 3.

The same procedure as Comparative Example 1 was used, except the curing agent was MTHPA. No rigid epoxy resin was afforded.

### Comparative Example 4.

The same procedure as Comparative Example 3 was used, except the curing time as 15 hours. No rigid epoxy resin was afforded.

### Comparative Example 5.

The same procedure as Comparative Example 1 was used, except the curing agent was NMA. No rigid epoxy resin was afforded.

### Comparative Example 6.

The same procedure as Comparative Example 5 was used, except the curing time was 15 hours. No rigid epoxy resin was afforded.

### Comparative Example 7.

BPA-DGE is heated at 160°C and combined with PMDA at an A/E ratio of 0.8:1 by weight. The resulting mixture had light yellow color and a substantial amount of the PMDA remained undissolved with stirring. The reaction mixture was poured into a mold preheated at 130°C, and then cured in the mold at 220°C for 1 hour to provide a rigid and cured resin having undissolved particles of PMDA distributed therein.

### Comparative Example 8.

The same procedure as Comparative Example 7 was used, except the curing time was 15 hours. The resulting product was a rigid and cured resin having undissolved particles of PMDA distributed therein

### Sample Analysis

The glass transition temperature (T_{g}) was determined by dynamic mechanical analysis (DMA) using an RDA III DMA from Rheometric Scientific. Sample bars were prepared (40 mm length, 4 mm width, and 6 mm thickness) and analyzed at -40 to 300°C with a temperature ramp of 3°C per minute and at a frequency of 6.283 radians per second.

### Evaluation

Table 2 shows the curing agent, catalyst, curing time (hours, hr), rigidity, and clarity for Examples 1 to 5 and Comparative Examples 1 to 8. Rigidity and clarity are the qualitative properties of the cured sample.

**Table 2.**

| | Curing Agent | Catalyst | Curing Time (hr) | Rigidity | Clarity |
|---|---|---|---|---|---|
| Example 1 | BPA-DA | No | 1 | Yes | Yes |
| Example 2 | BPA-DA | No | 3 | Yes | Yes |
| Example 3 | BPA-DA | No | 5 | Yes | Yes |
| Example 4 | BPA-DA | No | 7 | Yes | Yes |
| Example 5 | BPA-DA | No | 15 | Yes | Yes |
| Comparative Example 1 | MHHPA | No | 1 | No | No |
| Comparative Example 2 | MHHPA | No | 15 | No | No |
| Comparative Example 3 | MTHPA | No | 1 | No | No |
| Comparative Example 4 | MTHPA | No | 15 | No | No |
| Comparative Example 5 | NMA | No | 1 | No | No |
| Comparative Example 6 | NMA | No | 15 | No | No |
| Comparative Example 7 | PMDA | No | 1 | Yes | No |
| Comparative Example 8 | PMDA | No | 15 | Yes | No |

As shown in Table 2, BPA-DGE can be cured to provide clear and rigid castings using BPA-DA as the curing agent without the necessity of an added catalyst. Curing times of 1 to 15 hours were effective in Examples 1 to 5.

In contrast, anhydride curing agents such as MHHPA, MTHPA, and NMA in Comparative Examples 1-6 were ineffective in curing BPA-DGE and failed to provide clear and rigid resins under same curing conditions. In Comparative Examples 7 and 8, the dianhydride curing agent PMDA provided a rigid, cured resin without sufficient clarity and having a significant amount of undissolved PMDA particles embedded into the cured resin.

Table 3 shows the curing time (hr) and T_{g} (°C) for Examples 1 to 5.

**Table 3.**

| | Curing Time (hr) | T_{g} (°C) |
|---|---|---|
| Example 1 | 1 | 213 |
| Example 2 | 3 | 218 |
| Example 3 | 5 | 232 |
| Example 4 | 7 | 240 |
| Example 5 | 15 | 243 |

As shown in Table 3, Examples 1 to 5 had glass transition temperatures of greater than 210°C. The glass transition temperature was found to increase as a function of curing time.

The results show that the aromatic dianhydride curing agent BPA-DA can be used to provide high temperature, rigid, and clear epoxy resins in the absence of any added catalyst. Cured epoxide resins having similar properties were not obtained in the absence of an added catalyst for the anhydride curing agents MHHPA, MTHPA, NMA, and PMDA.

This disclosure further encompasses the following aspects.

Described is herein a curable epoxy composition, comprising: 100 parts by weight of an epoxy resin composition comprising a bisphenol A epoxy resin, a triglycidyl-substituted epoxy resin, a tetraglycidyl-substituted epoxy resin, a bisphenol F epoxy resin, a phenol novolak epoxy resin, a cresol novolak epoxy resin, a cycloaliphatic diglycidyl ester epoxy resin, a cycloaliphatic epoxy resin comprising a ring epoxy group, an epoxy resin containing a spiro-ring, a hydantoin epoxy resin, or any combination thereof; 30 to 200 parts by weight of an aromatic dianhydride curing agent of formula (1) 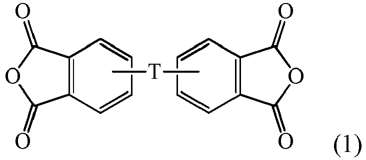 wherein T is -O-, -S-, -SO₂-, -SO-, or -O-Z-O- wherein Z is an aromatic C₆₋₂₄ monocyclic or polycyclic moiety optionally substituted with 1 to 6 C₁₋₈ alkyl groups, 1 to 8 halogen atoms, or a combination comprising at least one of the foregoing, wherein the composition does not contain a catalyst and wherein the composition contains no solvent or reactive diluent solvent.

The curable epoxy composition described therein, wherein the curable epoxy composition is manufactured by combining the epoxy resin composition and the aromatic dianhydride curing agent at a temperature of 130 to 200°C, preferably 140 to 190°C, more preferably 150 to 180°C to provide a reaction mixture, wherein the reaction mixture contains no solvent or reactive diluent solvent, and wherein the curable epoxy composition is then formed from the reaction mixture.

The curable epoxy composition described therein, wherein a stoichiometric ratio between the aromatic dianhydride curing agent and the epoxy resin composition is 0.1:1 to 2.0:1, preferably 0.4:1 to 1.2:1, more preferably 0.6:1 to 1:1.

The curable epoxy composition described therein, wherein T is -O- or a group of the formula -O-Z-O- wherein Z is of formula (2) 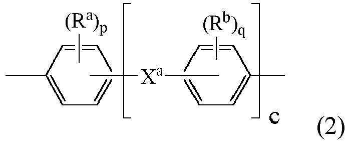 wherein R^{a} and R^{b} are each independently the same or different, and are a halogen atom or a monovalent C₁₋₆ alkyl group, X^{a} is a single bond, -O-, -S-, -S(O)-, -S(O)₂-, -C(O)-, or a C₁₋₁₈ organic bridging group, and p, q, and c are each independently integers of 0 to 4.

The curable epoxy composition described therein, wherein Z is a divalent group of formula (3a) or (3b) 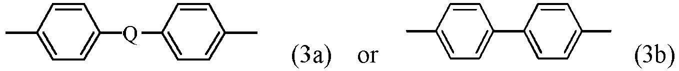 wherein Q is -O-, -S-, -C(O)-, -SOz-, -SO-, -P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof, preferably wherein Q is 2,2-isopropylidene.

The curable epoxy composition described therein, further comprising an additive composition; preferably wherein the additive composition comprises a particulate filler, a fibrous filler, an antioxidant, a heat stabilizer, a light stabilizer, a ultraviolet light stabilizer, a ultraviolet light-absorbing compound, a near infrared light-absorbing compound, an infrared light-absorbing compound, a plasticizer, a lubricant, a release agent, a antistatic agent, an anti-fog agent, an antimicrobial agent, a colorant, a surface effect additive, a radiation stabilizer, a flame retardant, an anti-drip agent, a fragrance, an adhesion promoter, a flow enhancer, a coating additive, a polymer different from the thermoset polymer, or a combination comprising at least one of the foregoing; more preferably wherein the additive composition comprises a flame retardant, a particulate filler, a fibrous filler, an adhesion promoter, a flow enhancer, a coating additive, a colorant, or a combination comprising at least one of the foregoing.

Described therein is also a method for the manufacture of the curable epoxy composition described in this document, the method comprising contacting the epoxy resin composition and the aromatic dianhydride curing agent at a temperature of 130 to 200°C, preferably 140 to 190°C, more preferably 150 to 180°C to provide reaction mixture.

The method described therein, wherein the reaction mixture contains no solvent or reactive diluent solvent.

It is also described in therein a thermoset epoxy composition comprising a cured product of the curable epoxy composition as described in this document.

The thermoset epoxy composition described therein, which after curing has at least one of: a glass transition temperature of greater than or equal to 170°C, preferably greater than or equal to 180°C, more preferably greater than or equal to 200°C, as determined by dynamic mechanical analysis; and a light transmission of greater than 50%, preferably greater than 70%, more preferably greater than 90%, as determined according to ASTM D1003 on a 2 mm plaque.

It is also described therein a method for the manufacture of a thermoset epoxy composition, the method comprising: curing the curable epoxy composition as described in this document, wherein the curing is performed without a catalyst; preferably wherein the curing of the curable epoxy composition comprises compression molding, injection molding, transfer molding, pultrusion, resin casting, or a combination comprising at least one of the foregoing.

The method described therein, wherein the curing comprises disposing the curable epoxy composition into a mold, and curing the epoxy resin composition at 150 to 260°C for 1 to 15 hours in the mold.

The method described therein, wherein the epoxy composition comprises bisphenol A diglycidyl ether and a dianhydride curing agent comprising bisphenol A dianhydride; wherein the curable epoxy composition is manufactured by contacting the epoxy resin composition and the aromatic dianhydride curing agent at a temperature of 130 to 200°C, preferably 140 to 190°C, more preferably 150 to 180°C, to provide a reaction mixture; and wherein the reaction mixture contains no solvent or reactive diluent solvent; preferably wherein the anhydride to epoxy (A/E) ratio is 0.8:1, the curable epoxy composition is disposed into the mold, wherein the mold is preheated to 130°C, and the curing of the epoxy resin composition is at 220°C: and more preferably wherein the anhydride to epoxy (A/E) ratio is 0.8:1, the curable epoxy composition is disposed into the mold, wherein the mold is preheated to 130°C, the curing of the epoxy resin composition is at 220°C, and the cured epoxy resin produced by the curing has a glass transition temperature of 213 to 243°C, as determined by dynamic mechanical analysis.

It is also described in this document, an article comprising the thermoset epoxy composition described therein, wherein the article is in the form of in the form of a composite, a foam, a fiber, a layer, a coating, an encapsulant, an adhesive, a sealant, a component, a prepreg, a casing, or a combination comprising at least one of the foregoing.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5 to 25 wt%", is inclusive of the endpoints and all intermediate values of the ranges of "5 wt% to 25 wt%," etc.). Disclosure of a narrower range or more specific group in addition to a broader range is not a disclaimer of the broader range or larger group. The singular forms "a" "an," and "the" include plural referents unless the context clearly dictates otherwise.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "hydrocarbyl" refers to a monovalent group containing carbon and hydrogen. Hydrocarbyl can be alkyl, cycloalkyl, alkenyl, cycloalkenyl, aryl, alkylaryl, or arylalkyl as defined below. The term "hydrocarbylene" refers to a divalent group containing carbon and hydrogen. Hydrocarbylene can be alkylene, cycloalkylene, arylene, alkylarylene, or arylalkylene as defined below. The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ-, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentenyl and cyclohexenyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group. "Amino" means a radical of the formula -NRR' wherein R and R' are independently hydrogen or a C₁-C₃₀ hydrocarbyl, for example a C₁-C₂₀ alkyl group or a C₆-C₃₀ aryl group. "Halogen" or "halogen atom" means a fluorine, chlorine, bromine, or iodine atom. The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. The suffix "oxy" indicates that the open valence of the group is on an oxygen atom and the suffix "thio" indicates that the open valence of the group is on a sulfur atom.

Unless substituents are otherwise specifically indicated, each of the foregoing groups can be unsubstituted or substituted, provided that the substitution does not significantly adversely affect synthesis, stability, or use of the compound. "Substituted" means that the compound, group, or atom is substituted with at least one (e.g., 1, 2, 3, or 4) substituents instead of hydrogen, where each substituent is independently nitro (-NO₂), cyano (-CN), hydroxy (-OH), halogen, thiol (-SH), thiocyano (-SCN), C₁₋₆ alkyl, C₂₋₆ alkenyl, C₂₋₆ alkynyl, C₁₋₆ haloalkyl, C₁₋₉ alkoxy, C₁₋₆ haloalkoxy, C₃₋₁₂ cycloalkyl, C₅₋₁₈ cycloalkenyl, C₆₋₁₂ aryl, C₇₋₁₃ arylalkylene (e.g., benzyl), C₇₋₁₂ alkylarylene (e.g., toluyl), C₄₋₁₂ heterocycloalkyl, C₃₋₁₂ heteroaryl, C₁₋₆ alkyl sulfonyl (-S(=O)₂-alkyl), C₆₋₁₂ arylsulfonyl (-S(=O)₂-aryl), or tosyl (CH₃C₆H₄SO₂-), provided that the normal valence of the substituted atom is not exceeded. When a compound or group is substituted, the indicated number of carbon atoms is the number of carbon atoms in the compound or group, excluding those of any substituents.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A curable epoxy composition, comprising:
100 parts by weight of an epoxy resin composition comprising a bisphenol A epoxy resin, a triglycidyl-substituted epoxy resin, a tetraglycidyl-substituted epoxy resin, a bisphenol F epoxy resin, a phenol novolak epoxy resin, a cresol novolak epoxy resin, a cycloaliphatic diglycidyl ester epoxy resin, a cycloaliphatic epoxy resin comprising a ring epoxy group, an epoxy resin containing a spiro-ring, a hydantoin epoxy resin, or any combination thereof;
30 to 200 parts by weight of an aromatic dianhydride curing agent of formula (1) 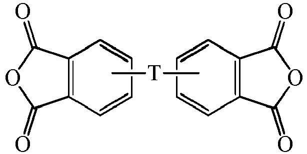 wherein T is -O-, -S-, -SO₂-, -SO-, or -O-Z-O- wherein Z is an aromatic C₆₋₂₄ monocyclic or polycyclic moiety optionally substituted with 1 to 6 C₁₋₈ alkyl groups, 1 to 8 halogen atoms, or a combination comprising at least one of the foregoing,
wherein the composition does not contain a catalyst, and
wherein the composition contains no solvent or reactive diluent solvent.

2. The curable epoxy composition of claim 1,
wherein the curable epoxy composition is manufactured by combining the epoxy resin composition and the aromatic dianhydride curing agent at a temperature of 130 to 200°C, preferably 140 to 190°C, more preferably 150 to 180°C to provide a reaction mixture,
wherein the reaction mixture contains no solvent or reactive diluent solvent, and
wherein the curable epoxy composition is then formed from the reaction mixture.

3. The curable epoxy composition of claim 1 or 2, wherein a stoichiometric ratio between the aromatic dianhydride curing agent and the epoxy resin composition is 0.1:1 to 2.0:1, preferably 0.4:1 to 1.2:1, more preferably 0.6:1 to 1:1.

4. The curable epoxy composition of any one of the preceding claims, wherein the epoxy resin composition comprises a bisphenol A epoxy resin.

5. The curable epoxy composition of any one of the preceding claims, wherein T is - O- or a group of the formula -O-Z-O- wherein Z is of formula (2) 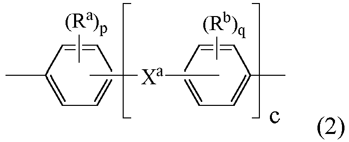 wherein
R^{a} and R^{b} are each independently the same or different, and are a halogen atom or a monovalent C₁₋₆ alkyl group,
X^{a} is a single bond, -O-, -S-, -S(O)-, -S(O)₂-, -C(O)-, or a C₁₋₁₈ organic bridging group, and
p, q, and c are each independently integers of 0 to 4.

6. The curable epoxy composition of claim 5, wherein Z is a divalent group of formula (3a) or (3b) 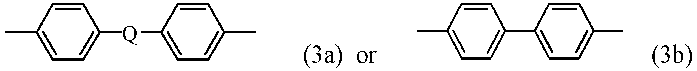 wherein Q is -O-, -S-, -C(O)-, -SOz-, -SO-, -P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof, preferably wherein Q is 2,2-isopropylidene.

7. The curable epoxy composition of any one of the preceding claims, further comprising an additive composition;
preferably wherein the additive composition comprises a particulate filler, a fibrous filler, an antioxidant, a heat stabilizer, a light stabilizer, a ultraviolet light stabilizer, a ultraviolet light-absorbing compound, a near infrared light-absorbing compound, an infrared light-absorbing compound, a plasticizer, a lubricant, a release agent, a antistatic agent, an anti-fog agent, an antimicrobial agent, a colorant, a surface effect additive, a radiation stabilizer, a flame retardant, an anti-drip agent, a fragrance, an adhesion promoter, a flow enhancer, a coating additive, a polymer different from the thermoset polymer, or a combination comprising at least one of the foregoing;
more preferably wherein the additive composition comprises a flame retardant, a particulate filler, a fibrous filler, an adhesion promoter, a flow enhancer, a coating additive, a colorant, or a combination comprising at least one of the foregoing.

8. A method for the manufacture of the curable epoxy composition of any one of the preceding claims, the method comprising contacting the epoxy resin composition and the aromatic dianhydride curing agent at a temperature of 130 to 200°C, preferably 140 to 190°C, more preferably 150 to 180°C to provide a reaction mixture.

9. The method of claim 8, wherein the reaction mixture contains no solvent or reactive diluent solvent.

10. A thermoset epoxy composition comprising a cured product of the curable epoxy composition of any one of claims 1 to 7.

11. The thermoset epoxy composition of claim 10, which after curing has at least one of:
a glass transition temperature of greater than or equal to 170°C, preferably greater than or equal to 180°C, more preferably greater than or equal to 200°C, as determined by dynamic mechanical analysis; and
a light transmission of greater than 50%, preferably greater than 70%, more preferably greater than 90%, as determined according to ASTM D1003 on a 2 mm plaque.

12. A method for the manufacture of a thermoset epoxy composition, the method comprising:
curing the curable epoxy composition of any one of claims 1 to 7,
wherein the curing is performed without a catalyst;
preferably wherein the curing of the curable epoxy composition comprises compression molding, injection molding, transfer molding, pultrusion, resin casting, or a combination comprising at least one of the foregoing.

13. The method of claim 12, wherein the curing comprises disposing the curable epoxy composition into a mold, and curing the epoxy resin composition at 150 to 260°C for 1 to 15 hours in the mold.

14. The method of claim 13, wherein the curable epoxy composition comprises bisphenol A diglycidyl ether; a dianhydride curing agent comprising bisphenol A dianhydride; and wherein the curable epoxy composition is manufactured by contacting the epoxy resin composition and the aromatic dianhydride curing agent at a temperature of 130 to 200°C, preferably 140 to 190°C, more preferably 150 to 180°C to provide a reaction mixture, wherein the reaction mixture contains no solvent or reactive diluent solvent,
preferably wherein
the anhydride to epoxy (A/E) ratio is 0.8:1,
the curable epoxy composition is disposed into the mold, wherein the mold is preheated to 130°C, and
the curing of the epoxy resin composition is at 220°C, and
more preferably wherein
the anhydride to epoxy (A/E) ratio is 0.8:1,
the curable epoxy composition is disposed into the mold, wherein the mold is preheated to 130°C,
the curing of the epoxy resin composition is at 220°C, and
the cured epoxy resin produced by the curing has a glass transition temperature of 213 to 243°C, as determined by dynamic mechanical analysis.

15. An article comprising the thermoset epoxy composition of claim 10 or claim 11, wherein the article is preferably in the form of a composite, a foam, a fiber, a layer, a coating, an encapsulant, an adhesive, a sealant, a component, a prepreg, a casing, or a combination comprising at least one of the foregoing.

## Patentansprüche

1. Härtbare Epoxidzusammensetzung, umfassend:
100 Gewichtsteile einer Epoxidharzzusammensetzung, die ein Bisphenol-A-Epoxidharz, ein Triglycidyl-substituiertes Epoxidharz, ein Tetraglycidyl-substituiertes Epoxidharz, ein Bisphenol F Epoxidharz, ein Phenol-Novolak-Epoxidharz, ein Kresol-Novolak-Epoxidharz, ein cycloaliphatisches Diglycidylester-Epoxidharz, ein cycloaliphatisches Epoxidharz, das eine Ringepoxidgruppe enthält, ein Epoxidharz, das einen Spiro-Ring enthält, ein Hydantoin-Epoxidharz oder eine Kombination davon umfasst,
30 bis 200 Gew.-Teile eines aromatischen Dianhydrid-Härters der Formel (1) 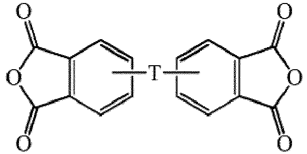
in der T -O-, -S-, -SO_{z}-, -SO- oder -O-Z-O- ist,
wobei Z ein aromatischer monocyclischer oder polycyclischer C₆₋₂₄-Rest ist, der gegebenenfalls mit 1 bis 6 C₁₋₈-Alkylgruppen, 1 bis 8 Halogenatomen oder einer Kombination substituiert ist, die mindestens eine der vorgenannten Gruppen umfasst,
wobei die Zusammensetzung keinen Katalysator enthält, und
wobei die Zusammensetzung kein Lösungsmittel oder reaktives Verdünnungslösungsmittel enthält.

2. Härtbare Epoxidzusammensetzung nach Anspruch 1, die durch Kombinieren der Epoxidharzzusammensetzung und des aromatischen Dianhydrid-Härtungsmittels bei einer Temperatur von 130 bis 200°C, vorzugsweise 140 bis 190°C, noch bevorzugter 150 bis 180°C, hergestellt wird, um ein Reaktionsgemisch zu erhalten,
wobei die Reaktionsmischung kein Lösungsmittel oder reaktives Verdünnungsmittel enthält, und
wobei die härtbare Epoxidzusammensetzung dann aus der Reaktionsmischung gebildet wird.

3. Härtbare Epoxidzusammensetzung nach Anspruch 1 oder 2, wobei das stöchiometrische Verhältnis zwischen dem aromatischen Dianhydrid-Härtungsmittel und der Epoxidharzzusammensetzung 0,1:1 bis 2,0:1, vorzugsweise 0,4:1 bis 1,2:1, noch bevorzugter 0,6:1 bis 1:1 beträgt.

4. Härtbare Epoxidzusammensetzung nach einem der vorhergehenden Ansprüche, wobei die Epoxidharzzusammensetzung ein Bisphenol-A-Epoxidharz umfasst.

5. Härtbare Epoxidzusammensetzung nach einem der vorangehenden Ansprüche, wobei T - O- oder eine Gruppe der Formel -O-Z-O- ist, in der Z die Formel (2) hat: 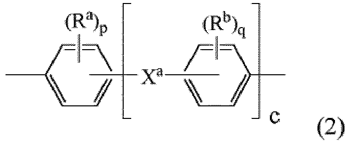 in der
R^{a} und R^{b} jeweils unabhängig voneinander gleich oder verschieden und ein Halogenatom oder eine monovalente C₁₋₆-Alkylgruppe sind,
X^{a} eine Einfachbindung, -O-, -S-, -S(O)-, -S(O)2-, -C(O)-, oder eine organische C₁₋₁₈-Brückengruppe ist, und
p, q und c jeweils unabhängig voneinander ganze Zahlen von 0 bis 4 sind.

6. Härtbare Epoxidzusammensetzung nach Anspruch 5, wobei Z eine divalente Gruppe der Formel (3a) oder (3b) ist 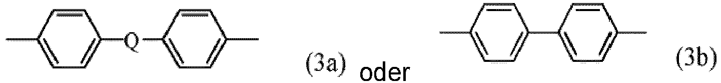
wobei Q -O-, -S-, -C(O)-, -SO₂-, -SO-, -P(R^{a})(=O)-, ist
wobei R^{a} ein C₁₋₈-Alkyl oder C₆₋₁₂-Aryl oder -C_{y}H_{2y}- ist, wobei y eine ganze Zahl von 1 bis 5 ist, oder ein halogeniertes Derivat davon, wobei Q vorzugsweise 2,2-Isopropyliden ist.

7. Härtbare Epoxidzusammensetzung nach einem der vorangegangenen Ansprüche, die weiterhin eine Additivzusammensetzung enthält,
wobei die Additivzusammensetzung vorzugsweise einen teilchenförmigen Füllstoff, einen faserförmigen Füllstoff, ein Antioxidationsmittel, einen Hitzestabilisator, einen Lichtstabilisator, einen Ultraviolettlichtstabilisator, eine ultraviolettes Licht absorbierende Verbindung, eine Nahinfrarotlicht absorbierende Verbindung, eine Infrarotlicht absorbierende Verbindung, einen Weichmacher, ein Gleitmittel, ein Trennmittel, ein antistatisches Mittel, ein Antibeschlagmittel, ein antimikrobielles Mittel, ein Farbmittel, ein Oberflächeneffektadditiv, einen Strahlungsstabilisator, ein Flammschutzmittel, ein Antitropfmittel, einen Duftstoff, einen Haftvermittler, einen Fließverbesserer, ein Beschichtungsadditiv, ein von dem duroplastischen Polymer verschiedenes Polymer oder eine Kombination umfasst, die mindestens eines der vorgenannten Mittel umfasst,
bevorzugter, wobei die Additivzusammensetzung ein Flammschutzmittel, einen teilchenfömigen Füllstoff, einen faserförmigen Füllstoff, einen Haftvermittler, einen Fließverbesserer, ein Beschichtungsadditiv, einen Farbstoff, oder eine Kombination umfasst, die mindestens einen der vorgenannten Stoffe umfasst.

8. Verfahren zur Herstellung der härtbaren Epoxidzusammensetzung gemäß einem der vorhergehenden Ansprüche, wobei die Epoxidharzzusammensetzung und das aromatische Dianhydrid-Härtungsmittel bei einer Temperatur von 130 bis 200°C, vorzugsweise 140 bis 190°C, vorzugsweise 150 bis 180°C in Kontakt gebracht werden, um ein Reaktionsgemisch zu erhalten.

9. Verfahren nach Anspruch 8, wobei das Reaktionsgemisch kein Lösungsmittel oder reaktives Verdünnungslösungsmittel enthält.

10. Duroplastische Epoxidzusammensetzung, umfassend ein gehärtetes Produkt aus der härtbaren Epoxidzusammensetzung gemäß einem der Ansprüche 1 bis 7.

11. Duroplastische Epoxidzusammensetzung nach Anspruch 10, die nach dem Aushärten mindestens eines der folgenden Merkmale aufweist:
eine Glasübergangstemperatur von mehr als oder gleich 170°C, vorzugsweise mehr als oder gleich 180°C, besonders bevorzugt mehr als oder gleich 200°C, wie durch dynamische mechanische Analyse bestimmt, und
eine Lichtdurchlässigkeit von mehr als 50 %, vorzugsweise mehr als 70 %, besonders bevorzugt mehr als 90 %, bestimmt nach ASTM D1003 an einer 2 mm dicken Platte.

12. Verfahren zur Herstellung einer duroplastischen Epoxidzusammensetzung, bei dem:
die härtbare Epoxidzusammensetzung gemäß einem der Ansprüche 1 bis 7 gehärtet wird,
wobei die Härtung ohne einen Katalysator durchgeführt wird,
wobei das Aushärten der härtbaren Epoxidzusammensetzung vorzugsweise das Formpressen, Spritzgießen, Transfergießen, Pultrusion, Harzgießen oder eine Kombination umfasst, die mindestens eines der vorgenannten Verfahren umfasst.

13. Verfahren nach Anspruch 12, wobei das Aushärten das Einbringen der härtbaren Epoxidzusammensetzung in eine Form und das Härten der Epoxidharzzusammensetzung bei 150 bis 260°C für 1 bis 15 Stunden in der Form umfasst.

14. Verfahren nach Anspruch 13, wobei die härtbare Epoxidzusammensetzung Bisphenol-A-Diglycidylether und ein Bisphenol-A-Dianhydrid umfassendes Dianhydrid-Härtungsmittel umfasst, und wobei die härtbare Epoxidzusammensetzung durch Inkontaktbringen der Epoxidharzzusammensetzung und des aromatischen Dianhydrid-Härtungsmittels bei einer Temperatur von 130 bis 200°C vorzugsweise 140 bis 190°C, noch bevorzugter 150 bis 180°C, hergestellt wird, um ein Reaktionsgemisch bereitzustellen, wobei das Reaktionsgemisch kein Lösungsmittel oder reaktives Verdünnungslösungsmittel enthält,
vorzugsweise wobei
das Verhältnis von Anhydrid zu Epoxid (A/E) 0,8:1 ist,
die härtbare Epoxidzusammensetzung in die Form gegeben wird, wobei die Form auf 130°C vorgewärmt wird, und
die Aushärtung der Epoxidharzzusammensetzung bei 220°C erfolgt, und
bevorzugter wobei das Verhältnis von Anhydrid zu Epoxid (A/E) 0,8:1 beträgt,
die härtbare Epoxidzusammensetzung in die Form eingebracht wird, wobei die Form auf 130°C vorgeheizt wird,
die Härtung der Epoxidharzzusammensetzung bei 220°C erfolgt, und
das gehärtete Epoxidharz, das durch das Härten erzeugt wird, eine Glasübergangstemperatur von 213 bis 243°C aufweist, bestimmt durch dynamische mechanische Analyse.

15. Gegenstand, umfassend die duroplastische Epoxidzusammensetzung gemäß Anspruch 10 oder 11, wobei der Gegenstand vorzugsweise die Form eines Verbundstoffs, eines Schaums, einer Faser, einer Schicht, einer Beschichtung, eines Verkapselungsmittels, eines Klebstoffs, eines Dichtungsmittels, eines Bauteils, eines Prepregs, eines Gehäuses oder einer Kombination, die mindestens einen der vorgenannten Stoffe umfasst, hat.

## Revendications

1. Composition époxy durcissable comprenant :
100 parties en poids d'une composition de résine époxy comprenant une résine époxy de bisphénol A, une résine époxy à substitution triglycidyle, une résine époxy à substitution tétraglycidyle, une résine époxy de bisphénol F, une résine époxy novolaque de phénol, une résine époxy novolaque de crésol, une résine époxy d'ester diglycidylique cycloaliphatique, une résine époxy cycloaliphatique comprenant un groupe époxy cyclique, une résine époxy contenant un cycle spiro, une résine époxy d'hydantoïne, ou l'une quelconque de leurs combinaisons ;
30 à 200 parties en poids d'un agent durcisseur dianhydride aromatique de formule (1) 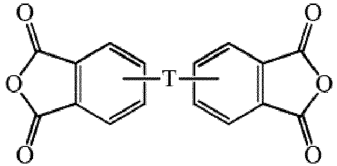
dans laquelle T est -O-, -S-, -SO₂-, -SO- ou -O-Z-O- où Z est un fragment aromatique en C₆ à C₂₄ monocyclique ou polycyclique éventuellement substitué par 1 à 6 groupes alkyles en C₁ à C₈, 1 à 8 atomes d'halogène, ou une combinaison comprenant au moins l'un des précédents,
dans laquelle la composition ne contient pas de catalyseur, et
dans laquelle la composition ne contient pas de solvant ou de solvant diluant réactif.

2. Composition époxy durcissable selon la revendication 1,
dans laquelle la composition époxy durcissable est fabriquée par combinaison de la composition de résine époxy et de l'agent durcisseur dianhydride aromatique à une température de 130 à 200 °C, de préférence de 140 à 190 °C, mieux encore de 150 à 180 °C pour former un mélange réactionnel,
dans laquelle le mélange réactionnel ne contient pas de solvant ou de solvant diluant réactif, et
dans laquelle la composition époxy durcissable est ensuite formée à partir du mélange réactionnel.

3. Composition époxy durcissable selon la revendication 1 ou 2, dans laquelle le rapport stoechiométrique entre l'agent durcisseur dianhydride aromatique et la composition de résine époxy est de 0,1/1 à 2,0/1, de préférence de 0,4/1 à 1,2/1, mieux encore de 0,6/1 à 1/1.

4. Composition époxy durcissable selon l'une quelconque des revendications précédentes, laquelle composition de résine époxy comprend une résine époxy de bisphénol A.

5. Composition époxy durcissable selon l'une quelconque des revendications précédentes, dans laquelle T est -O- ou un groupe de formule -O-Z-O- dans laquelle Z est de formule (2) 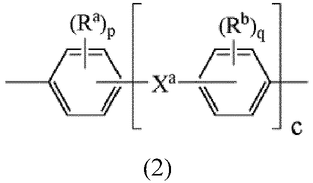 dans laquelle
chacun de R^{a} et R^{b}, identiques ou différents, est indépendamment un atome d'halogène ou un groupe alkyle monovalent en C₁ à C₆,
X^{a} est une liaison simple, -O-, -S-, -S(O)-, -S(O)₂-, -C(O)- ou un groupe pontant organique en C₁ à C₁₈, et
chacun de p, q et c est indépendamment un entier de 0 à 4.

6. Composition époxy durcissable selon la revendication 5, dans laquelle Z est un groupe divalent de formule (3a) ou (3b) 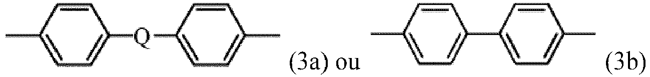 dans laquelle Q est -O-, -S-, -C(O)-, -SO₂-, -SO-, -P(R^{a})(=O)- où R^{a} est un alkyle en C₁ à C₈ ou un aryle en C₆ à C₁₂, ou -C_{y}H_{2y}- où y est un entier de 1 à 5 ou un dérivé halogéné de celui-ci, de préférence dans laquelle Q est le 2,2-isopropylidène.

7. Composition époxy durcissable selon l'une quelconque des revendications précédentes, comprenant en outre une composition d'additif ;
de préférence dans laquelle la composition d'additif comprend une charge particulaire, une charge fibreuse, un antioxydant, un stabilisant à la chaleur, un stabilisant à la lumière, un stabilisant à la lumière ultraviolette, un composé absorbant la lumière ultraviolette, un composé absorbant la lumière infrarouge proche, un composé absorbant la lumière infrarouge, un plastifiant, un lubrifiant, un agent de démoulage, un agent antistatique, un agent antibuée, un agent antimicrobien, un colorant, un additif à effet de surface, un stabilisant aux radiations, un retardateur de flamme, un agent anti-goutte, un parfum, un promoteur d'adhérence, un amplificateur d'écoulement, un additif de revêtement, un polymère différent du polymère thermodurci, ou une combinaison comprenant au moins l'un des précédents ;
mieux encore dans laquelle la composition d'additif comprend un retardateur de flamme, une charge particulaire, une charge fibreuse, un promoteur d'adhérence, un amplificateur d'écoulement, un additif de revêtement, un colorant, ou une combinaison comprenant au moins l'un des précédents.

8. Méthode pour la fabrication de la composition époxy durcissable de l'une quelconque des revendications précédentes, la méthode comprenant la mise en contact de la composition de résine époxy et de l'agent durcisseur dianhydride aromatique à une température de 130 à 200 °C, de préférence de 140 à 190 °C, mieux encore de 150 à 180 °C, pour former un mélange réactionnel.

9. Méthode selon la revendication 8, dans laquelle le mélange réactionnel ne contient pas de solvant ou de solvant diluant réactif.

10. Composition époxy thermodurcie comprenant un produit durci de la composition époxy durcissable selon l'une quelconque des revendications 1 à 7.

11. Composition époxy thermodurcie selon la revendication 10, qui, après durcissement, a au moins l'une parmi :
une température de transition vitreuse, telle que déterminée par analyse mécanique dynamique, supérieure ou égale à 170 °C, de préférence supérieure ou égale à 180 °C, mieux encore supérieure ou égale à 200 °C ; et
une transmission de la lumière, telle que déterminée conformément à la norme ASTM D1003 sur une plaque de 2 mm, supérieure à 50 %, de préférence supérieure à 70 %, mieux encore supérieure à 90 %.

12. Méthode pour la fabrication d'une composition époxy thermodurcie, la méthode comprenant :
le durcissement de la composition époxy durcissable selon l'une quelconque des revendications 1 à 7,
dans laquelle le durcissement est effectué sans catalyseur ;
de préférence dans laquelle le durcissement de la composition époxy durcissable comprend un moulage par compression, un moulage par injection, un moulage par transfert, une pultrusion, un coulage de résine, ou une combinaison comprenant au moins l'un des précédents.

13. Méthode selon la revendication 12, dans laquelle le durcissement comprend la disposition de la composition époxy durcissable dans un moule, et le durcissement de la composition de résine époxy à 150 à 260 °C pendant 1 à 15 heures dans le moule.

14. Méthode selon la revendication 13, dans laquelle la composition époxy durcissable comprend de l'éther diglycidylique de bisphénol A ; un agent durcisseur dianhydride comprenant du dianhydride de bisphénol A ; et dans laquelle la composition époxy durcissable est fabriquée par mise en contact de la composition de résine époxy et de l'agent durcisseur dianhydride aromatique à une température de 130 à 200 °C, de préférence de 140 à 190 °C, mieux encore de 150 à 180 °C pour former un mélange réactionnel, dans laquelle le mélange réactionnel ne contient pas de solvant ou de solvant diluant réactif,
de préférence dans laquelle
le rapport de l'anhydride à l'époxy (A/E) est de 0,8/1,
la composition époxy durcissable est disposée dans le moule, lequel moule étant préchauffé à 130 °C, et
le durcissement de la composition de résine époxy est à 220 °C, et
mieux encore dans laquelle
le rapport de l'anhydride à l'époxy (A/E) est de 0,8/1,
la composition époxy durcissable est disposée dans le moule, lequel moule étant préchauffé à 130 °C,
le durcissement de la composition de résine époxy est à 220 °C, et
la résine époxy durcie produite par le durcissement a une température de transition vitreuse, telle que déterminée par analyse mécanique dynamique, de 213 à 243 °C.

15. Article comprenant la composition époxy thermodurcie selon la revendication 10 ou la revendication 11, dans lequel l'article est de préférence sous la forme d'un composite, d'une mousse, d'une fibre, d'une couche, d'un revêtement, d'un produit encapsulant, d'un adhésif, d'un agent d'étanchéité, d'un composant, d'un préimprégné, d'une enceinte, ou d'une combinaison comprenant au moins l'un des précédents.
